(19) Europäisches Patentamt
European Patent Office
Office européen des brevets

(11) **EP 4 553 783 A1**

(12) **EUROPEAN PATENT APPLICATION**
published in accordance with Art. 153(4) EPC

(43) Date of publication:
**14.05.2025 Bulletin 2025/20**

(51) International Patent Classification (IPC):
**G06V 10/74** (2022.01)   **G06V 20/58** (2022.01)

(21) Application number: 23834739.7

(22) Date of filing: **30.06.2023**

(86) International application number:
**PCT/CN2023/104327**

(87) International publication number:
**WO 2024/007972** (11.01.2024 Gazette 2024/02)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.07.2022 CN 202210794214**

(71) Applicant: **Anhui NIO Autonomous Driving
Technology Co., Ltd.
Hefei, Anhui 230601 (CN)**

(72) Inventors:
• **LI, Lin
  Shanghai 201804 (CN)**
• **ZHAI, Yuqiang
  Shanghai 201804 (CN)**
• **ZHOU, Yueyin
  Shanghai 201804 (CN)**

(74) Representative: **Vossius & Partner
Patentanwälte Rechtsanwälte mbB
Siebertstrasse 3
81675 München (DE)**

(54) **OBJECT ASSOCIATION METHOD, COMPUTER DEVICE, COMPUTER READABLE STORAGE MEDIUM, AND VEHICLE**

(57)     The invention relates to the field of autonomous driving technologies, and specifically provides an object association method, a computer device, a storage medium, and a vehicle, to solve the problem of how to accurately recognize object around a vehicle. The method of the invention includes: associating, based on image features of objects to be recognized in multiple continuous frames of images collected by a same vehicle-mounted vision sensor, the objects to be recognized in the multiple continuous frames of images, to form a single-sensor-level object to be recognized; associating, based on an image feature of each of the single-sensor-level object to be recognized, single-sensor-level objects to be recognized that correspond to different vehicle-mounted vision sensors, to form a cross-sensor-level object to be recognized at cross-sensor level; and associating the cross-sensor-level object to be recognized based on an image feature of each of the cross-sensor-level object to be recognized, to form a final object to be recognized. Through the above method, it is possible to avoid splitting a same object to be recognized into a plurality of different objects, thereby improving the accuracy of object recognition.

FIG. 1

**Description**

The present application claims the priority to Chinese Patent Application No. CN 115205820A, filed on July 5, 2022, and entitled "OBJECT ASSOCIATION METHOD, COMPUTER DEVICE, COMPUTER-READABLE STORAGE MEDIUM, AND VEHICLE", which is incorporated herein by reference in its entirety.

**TECHNICAL FIELD**

The disclosure relates to the field of autonomous driving technologies, and specifically provides an object association method, a computer device, a computer-readable storage medium, and a vehicle.

**BACKGROUND ART**

In an autonomous driving process, vehicle sensors are needed to recognize an object around a vehicle, and then plan a traveling trajectory of the vehicle based on information such as a position and/or a moving speed of the object and control the vehicle to travel along the traveling trajectory. In order to improve accuracy and efficiency of object recognition, a plurality of vehicle sensors are usually used for object recognition, and then objects to be recognized by the plurality of vehicle sensors are associated to obtain final objects to be recognized. However, due to different image acquisition accuracy and/or image acquisition angles of different vehicle sensors, there may be differences in image features extracted from images of the same object acquired by different vehicle sensors. After the objects to be recognized by the plurality of vehicle sensors are associated, the same object may be split into a plurality of different objects, affecting the accuracy of object recognition and thus reducing the safety of vehicle traveling.
Accordingly, there is a need for a new technical solution in the field to solve the problem described above.

**SUMMARY**

To overcome the above disadvantages, the disclosure is proposed to provide an object recognition method, a computer device, a computer-readable storage medium, and a vehicle that solve or at least partially solve a technical problem of how to accurately recognize an object around a vehicle.
According to a first aspect, an object association method is provided. The method includes:

associating, based on image features of objects to be recognized in a plurality of frames of continuous images acquired by a same vehicle-mounted vision sensor, the objects to be recognized in the plurality of frames of continuous images, to form at least one single-sensor-level object to be recognized that corresponds to the same vehicle-mounted vision sensor;
associating, based on an image feature of each of the at least one single-sensor-level object to be recognized, single-sensor-level objects to be recognized that correspond to different vehicle-mounted vision sensors, to form at least one cross-sensor-level object to be recognized; and
associating the at least one cross-sensor-level object to be recognized based on an image feature of each of the at least one cross-sensor-level object to be recognized, to form a final object to be recognized.

In a technical solution of the above object association method, the step of "associating, based on image features of objects to be recognized in a plurality of frames of continuous images acquired by a same vehicle-mounted vision sensor, the objects to be recognized in the plurality of frames of continuous images, to form at least one single-sensor-level object to be recognized that corresponds to the same vehicle-mounted vision sensor" specifically includes:

determining, based on an image feature of each current-frame object to be recognized in a current frame of image and an image feature of each previous-frame object to be recognized in a previous frame of image, a feature similarity between the current-frame object to be recognized and the previous-frame object to be recognized; and
associating the current-frame object to be recognized with the previous-frame object to be recognized based on the feature similarity, to form the at least one single-sensor-level object to be recognized.

In a technical solution of the above object association method, the step of "determining, based on an image feature of each current-frame object to be recognized in a current frame of image and an image feature of each previous-frame object to be recognized in a previous frame of image, a feature similarity between the current-frame object to be recognized and the previous-frame object to be recognized" specifically includes:

separately performing, based on object position information in the image feature, coordinate system transformation on the current-frame object to be recognized and the previous-frame object to be recognized, to transform the current-frame object to be recognized and the previous-frame object to be recognized into a bird's eye view (BEV) image with a current vehicle as an origin of a BEV coordinate system;

separately calculating an object distance between the current-frame object to be recognized and the current vehicle and an object distance between the previous-frame object to be recognized and the current vehicle based on coordinates of the current-frame object to be recognized and the previous-frame object to be recognized on the BEV image; and

determining a first feature similarity between the current-frame object to be recognized and the previous-frame object to be recognized based on the object distances;

and/or the step of "determining, based on an image feature of each current-frame object to be recognized in a current frame of image and an image feature of each previous-frame object to be recognized in a previous frame of image, a feature similarity between the current-frame object to be recognized and the previous-frame object to be recognized" specifically includes:

calculating an intersection over union between a bounding box of the current-frame object to be recognized and a bounding box of the previous-frame object to be recognized based on object bounding boxes in the image features; and

determining a second feature similarity between the current-frame object to be recognized and the previous-frame object to be recognized based on the intersection over union.

In a technical solution of the above object association method, the step of "associating the current-frame object to be recognized with the previous-frame object to be recognized based on the feature similarity, to form the at least one single-sensor-level object to be recognized" specifically includes:

for each current-frame object to be recognized, associating the current-frame object to be recognized with each previous-frame object to be recognized in the following way:

determining whether the first feature similarity between the current-frame object to be recognized and the previous-frame object to be recognized is greater than a preset first similarity threshold; and

if the first feature similarity is greater than the first similarity threshold or the second feature similarity is greater than the second similarity threshold, associating the current-frame object to be recognized with the previous-frame object to be recognized, to form one of the at least one single-sensor-level object to be recognized; or

if the first feature similarity is not greater than the first similarity threshold, continuing to determine whether the second feature similarity between the current-frame object to be recognized and the previous-frame object to be recognized is greater than a preset second similarity threshold; and

if the second feature similarity is greater than the second similarity threshold, associating the current-frame object to be recognized with the previous-frame object to be recognized, to form one of the at least one single-sensor-level object to be recognized; or if the second feature similarity is less than or equal to the second similarity threshold, skipping associating the current-frame object to be recognized with the previous-frame object to be recognized, and separately using, as a single-sensor-level object to be recognized, the current-frame object to be recognized;

or the step of "associating the current-frame object to be recognized with the previous-frame object to be recognized based on the feature similarity, to form the at least one single-sensor-level object to be recognized" specifically includes:

for each current-frame object to be recognized, associating the current-frame object to be recognized with each previous-frame object to be recognized in the following way:

determining whether the first feature similarity between the current-frame object to be recognized and the previous-frame object to be recognized is greater than a preset first similarity threshold or whether the second feature similarity between the current-frame object to be recognized and the previous-frame object to be recognized is greater than a preset second similarity threshold; and

if the first feature similarity is greater than the first similarity threshold or the second feature similarity is greater than the second similarity threshold, associating the current-frame object to be recognized with the previous-frame object to be recognized, to form one of the at least one single-sensor-level object to be recognized; or if the first feature similarity is not greater than the first similarity threshold or the second feature similarity is not greater than the second similarity threshold, skipping associating the current-frame object to be recognized with the previous-frame object to be recognized, and separately using, as a single-sensor-level object to be recognized, the current-frame object to be recognized.

In a technical solution of the above object association method, the step of "associating, based on an image feature of each of the at least one single-sensor-level object to be recognized, single-sensor-level objects to be recognized that correspond to different vehicle-mounted vision sensors, to form at least one cross-sensor-level object to be recognized" specifically includes:

determining, based on the image feature of each of the at least one single-sensor-level object to be recognized, a feature similarity between the single-sensor-level objects to be recognized that correspond to the different vehicle-mounted vision sensors; and

associating, based on the feature similarity, the single-sensor-level objects to be recognized that correspond to the different vehicle-mounted vision sensors, to form the at least one cross-sensor-level object to be recognized.

In a technical solution of the above object association method, the step of "determining, based on the image feature of each of the at least one single-sensor-level object to be recognized, a feature similarity between the single-sensor-level objects to be recognized that correspond to the different vehicle-mounted vision sensors" specifically includes:

performing, based on object position information in the image feature, coordinate system transformation on each of the single-sensor-level objects to be recognized, to transform the single-sensor-level object to be recognized into a bird's eye view (BEV) image with a current vehicle as an origin of a BEV coordinate system;

calculating an object distance between the single-sensor-level object to be recognized and the current vehicle based on coordinates of the single-sensor-level object to be recognized on the BEV image; and

determining, based on the object distance, a third feature similarity between the single-sensor-level objects to be recognized that correspond to the different vehicle-mounted vision sensors;

and/or the step of "determining, based on the image feature of each of the at least one single-sensor-level object to be recognized, a feature similarity between the single-sensor-level objects to be recognized that correspond to the different vehicle-mounted vision sensors" specifically includes:

separately calculating, based on an object bounding box in the image feature, an intersection over union between bounding boxes of the single-sensor-level objects to be recognized that correspond to the different vehicle-mounted vision sensors; and

determining, based on the intersection over union, a fourth feature similarity between the single-sensor-level objects to be recognized that correspond to the different vehicle-mounted vision sensors;

and/or the step of "determining, based on the image feature of each of the at least one single-sensor-level object to be recognized, a feature similarity between the single-sensor-level objects to be recognized that correspond to the different vehicle-mounted vision sensors" specifically includes:

obtaining a ReID feature of each of the single-sensor-level objects to be recognized by using a person re-identification technology and based on the image feature of each of the at least one single-sensor-level object to be recognized; and

determining, based on the ReID feature, a fifth feature similarity between the single-sensor-level objects to be recognized that correspond to the different vehicle-mounted vision sensors;

and/or the step of "associating, based on the feature similarity, the single-sensor-level objects to be recognized that correspond to the different vehicle-mounted vision sensors, to form the at least one cross-sensor-level object to be recognized" specifically includes:

for each of the single-sensor-level objects to be recognized, determining whether there is another single-sensor-level object to be recognized whose feature similarity with the current single-sensor-level object to be recognized is greater than a preset third similarity threshold; and

if there is the another single-sensor-level object to be recognized, associating the current single-sensor-level object to be recognized with the another single-sensor-level object to be recognized, to form a cross-sensor-level object to be recognized; or

if there is no another single-sensor-level object to be recognized, separately using, as a cross-sensor-level object to be recognized, the current single-sensor-level object to be recognized.

In a technical solution of the above object association method, the step of "determining, based on the image feature of each of the at least one single-sensor-level object to be recognized, a feature similarity between the single-sensor-level objects to be recognized that correspond to the different vehicle-mounted vision sensors" further includes: performing weighted sum calculation on the third feature similarity and/or the fourth feature similarity and/or the fifth feature similarity, and using a calculation result as a final feature similarity.

In a technical solution of the above object association method, the step of "associating the at least one cross-sensor-level object to be recognized based on an image feature of each of the at least one cross-sensor-level object to be recognized, to form a final object to be recognized" specifically includes:

separately calculating a two-dimensional similarity between different cross-sensor-level objects to be recognized based on object two-dimensional information in the image feature of each of the at least one cross-sensor-level object to be recognized, and associating the different cross-sensor-level objects to be recognized based on the two-dimensional similarity, to form the final object to be recognized;

and/or separately calculating a three-dimensional similarity between different cross-sensor-level objects to be recognized based on object three-dimensional information in the image feature of each of the at least one cross-sensor-level object to be recognized, and associating the different cross-sensor-level objects to be recognized based on the three-dimensional similarity, to form the final object to be recognized.

According to a second aspect, a computer device is provided. The computer device includes a processor and a storage apparatus adapted to store a plurality of pieces of program code, where the program code is adapted to be loaded and run by the processor to perform the object association method according to any one of the technical solutions of the above object association method.

According to a third aspect, a computer-readable storage medium is provided. A plurality of pieces of program code are stored in the computer-readable storage medium, and the program code is adapted to be loaded and run by a processor to perform the object association method according to any one of the technical solutions of the above object association method.

According to a fourth aspect, a vehicle is provided, and the vehicle includes the computer device described in the above technical solution of the computer device.

The one or more technical solutions of the disclosure described above have at least one or more of the following beneficial effects:

In implementation of the technical solutions of the disclosure, first, the objects to be recognized in the plurality of frames of continuous images may be associated based on the image features of the objects to be recognized in the plurality of frames of continuous images acquired by the same vehicle-mounted vision sensor, to form the at least one single-sensor-level object to be recognized that corresponds to the same vehicle-mounted vision sensor. Then, the single-sensor-level objects to be recognized that correspond to the different vehicle-mounted vision sensors may be associated based on the image feature of each of the at least one single-sensor-level object to be recognized, to form the at least one cross-sensor-level object to be recognized. Finally, the at least one cross-sensor-level object to be recognized may be associated based on the image feature of each of the at least one cross-sensor-level object to be recognized, to form the final object to be recognized.

The image features of the objects to be recognized in the plurality of frames of continuous images acquired by the same vehicle-mounted vision sensor may represent historical time series feature information of the objects to be recognized. The objects to be recognized are associated by using the historical time series feature information to form single-sensor-level objects to be recognized, which can better establish a correlation between the objects to be recognized and effectively avoid the situation where a same object to be recognized is split into a plurality of different objects when there are differences in image features extracted from images acquired by different vehicle-mounted vision sensors from the same object to be recognized due to different image acquisition accuracy and/or image acquisition angles of the different vehicle-mounted vision sensors, thereby improving the accuracy of object recognition.

## BRIEF DESCRIPTION OF THE DRAWINGS

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:

FIG. 1 is a schematic flowchart of main steps of an object association method according to an embodiment of the disclosure;

FIG. 2 is a schematic flowchart of main steps of a method for forming a single-sensor-level object to be recognized according to an embodiment of the disclosure; and

FIG. 3 is a schematic flowchart of main steps of forming a cross-sensor-level object to be recognized according to an embodiment of the disclosure.

**DETAILED DESCRIPTION OF EMBODIMENTS**

Some implementations of the disclosure are described below with reference to the accompanying drawings. Those skilled in the art should understand that these implementations are merely used to explain the technical principles of the disclosure, and are not intended to limit the scope of protection of the disclosure.

In the description of the disclosure, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B.

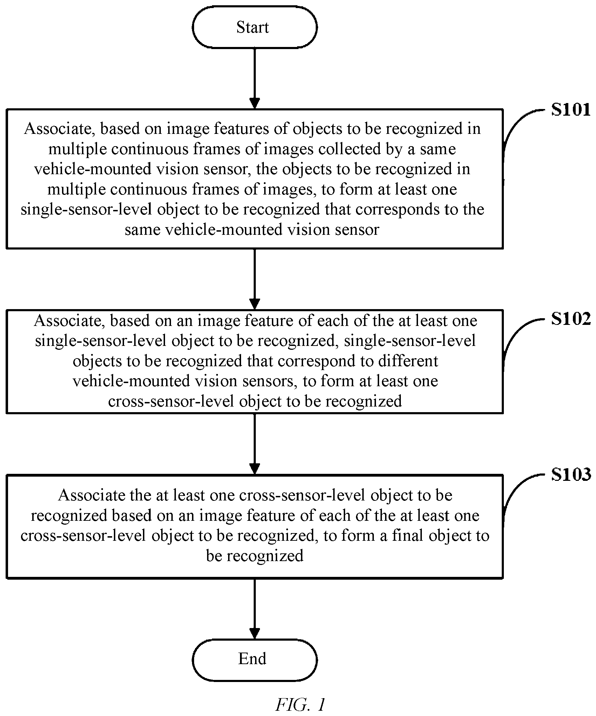

Referring to FIG. 1, FIG. 1 is a schematic flowchart of main steps of an object association method according to an embodiment of the disclosure. As shown in FIG. 1, the object association method in this embodiment of the disclosure mainly includes the following step S 101 to step S103.

Step S101: Associate, based on image features of objects to be recognized in a plurality of frames of continuous images acquired by a same vehicle-mounted vision sensor, the objects to be recognized in the plurality of frames of continuous images, to form at least one single-sensor-level object to be recognized that corresponds to the same vehicle-mounted vision sensor.

The vehicle-mounted vision sensor is a sensor disposed on a vehicle for acquiring an image. The image feature of the object to be recognized includes but is not limited to object position information, a size, and a direction cosine of the object to be recognized. The object position information may be two-dimensional coordinates and three-dimensional coordinates of the object to be recognized.

The images acquired by the vehicle-mounted vision sensor may include a plurality of different objects to be recognized. The objects to be recognized in the plurality of frames of continuous images are associated, so that the same objects to be recognized in these images can be associated to form a single-sensor-level object to be recognized.

For example, a plurality of frames of continuous images acquired by a vehicle-mounted vision sensor A each include objects to be recognized $O_{A1}$, $O_{A2}$ and $O_{A3}$. The objects to be recognized in the plurality of frames of continuous images are associated, so that the objects to be recognized $O_{A1}$ in the frames of images can be associated to form one single-sensor-level object to be recognized $O_{A1}'$, the objects to be recognized $O_{A2}$ in the frames of images can be associated to form one single-sensor-level object to be recognized $O_{A2}'$, and the objects to be recognized $O_{A3}$ in the frames of images are associated to form one single-sensor-level object to be recognized $O_{A3}'$.

Step S102: Associate, based on an image feature of each of the at least one single-sensor-level object to be recognized, single-sensor-level objects to be recognized that correspond to different vehicle-mounted vision sensors, to form at least one cross-sensor-level object to be recognized.

Different single-sensor-level objects to be recognized may be the same objects to be recognized or may not be the same objects to be recognized. The single-sensor-level objects to be recognized that correspond to different vehicle-mounted vision sensors are associated, and the same objects to be recognized in the single-sensor-level objects to be recognized may be associated to form a cross-sensor-level object to be recognized.

For example, a vehicle is equipped with three vehicle-mounted vision sensors A, B, and C. A single-sensor-level object to be recognized $O_A'$ that corresponds to the vehicle-mounted vision sensor A may be obtained based on image features of objects to be recognized $O_A$ in the plurality of frames of images acquired by the same vehicle-mounted vision sensor A. Similarly, a single-sensor-level object to be recognized $O_B'$ that corresponds to the vehicle-mounted vision sensor B may further be obtained, and a single-sensor-level object to be recognized $O_C'$ that corresponds to the vehicle-mounted vision sensor C may further be obtained. The objects to be recognized $O_A'$, $O_B'$, and $O_C'$ are associated, so that a cross-sensor-level object to be recognized $O_{ABC}'$ may be obtained.

Step S103: Associate the at least one cross-sensor-level object to be recognized based on an image feature of each of the at least one cross-sensor-level object to be recognized, to form a final object to be recognized.

Different cross-sensor-level objects to be recognized may be the same objects to be recognized or may not be the same objects to be recognized. The cross-sensor-level objects to be recognized are associated, and the same objects to be recognized in the cross-sensor-level objects to be recognized may be associated to form a final object to be recognized.

The image features of the objects to be recognized in the plurality of frames of continuous images acquired by the same vehicle-mounted vision sensor may represent historical time series feature information of the objects to be recognized. The objects to be recognized are associated by using the historical time series feature information to form single-sensor-level objects to be recognized, which can better establish a correlation between the objects to be recognized. Therefore, the method described in the above step S101 to step S103 can effectively avoid the problem of splitting the same object to be recognized into a plurality of different objects when there are differences in image features extracted from images acquired by different vehicle-mounted vision sensors from the same object to be recognized, thereby improving the recognition accuracy of objects to be recognized.

The above step S101 to step S103 are separately further described below.

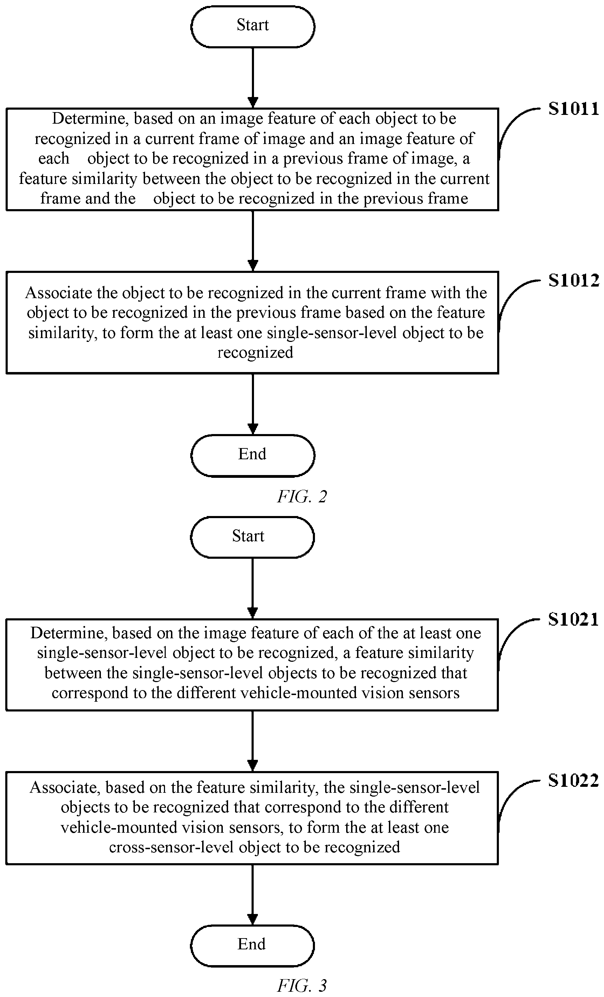

Referring to FIG. 2, in order to accurately associate the objects to be recognized in the plurality of frames of continuous images acquired by the same vehicle-mounted vision sensor, in one implementation of the above step S101, the objects to be recognized may be associated through the following step S1011 and step S1012.

Step S1011: Determine, based on an image feature of each current-frame object to be recognized in a current frame of image and an image feature of each previous-frame object to be recognized in a previous frame of image, a feature similarity between the current-frame object to be recognized and the previous-frame object to be recognized.

The feature similarity is a similarity between the image features of the objects to be recognized. A larger feature similarity indicates a larger similarity between the objects to be recognized, and a smaller feature similarity indicates a smaller similarity between the objects to be recognized.

Since the image feature of the object to be recognized may include various feature information such as object position information, a size, and a direction cosine of the object to be recognized, in this implementation, a feature similarity between objects to be recognized may be determined by using different methods based on different feature information. The following separately describes specific methods for determining a feature similarity between objects to be recognized based on object position information and object bounding boxes in image features.

1. A feature similarity is determined based on object position information.

In this implementation, the feature similarity between the objects to be recognized may be determined based on the object position information in the image features through the following step 11 to step 13.

Step 11: Separately perform, based on object position information in the image feature, coordinate system transformation on the current-frame object to be recognized and the previous-frame object to be recognized, to transform the current-frame object to be recognized and the previous-frame object to be recognized into a bird's eye view (BEV) image with a current vehicle as an origin of a BEV coordinate system.

In this implementation, a conventional coordinate system transformation method in the field of image processing technologies may be used to transform an object to be recognized to the BEV image based on object position information of the object to be recognized. The coordinate system transformation method is not described in details in this implementation.

Step 12: Separately calculate an object distance between the current-frame object to be recognized and the current vehicle and an object distance between the previous-frame object to be recognized and the current vehicle based on coordinates of the current-frame object to be recognized and the previous-frame object to be recognized on the BEV image.

In this implementation, an object distance between an object to be recognized and the current vehicle may be calculated in the following way:

Coordinates of the object to be recognized on the BEV image include an X-axis coordinate and a Y-axis coordinate in the image coordinate system of the BEV image. After the coordinates of the object to be recognized on the BEV image are obtained, the X-axis coordinate and the Y-axis coordinate may be normalized first, and then the object distance between the object to be recognized and the current vehicle may be calculated using the following formula (1).

$$d1 = x_{nor1}^2 + y_{nor1}^2 \quad (1)$$

In formula (1), parameters are respectively defined as follows: d1 represents the object distance between the object to be recognized and the current vehicle, $x_{nor1}$ represents a normalized X-axis coordinate, and $y_{nor1}$ represents a normalized Y-axis coordinate.

In addition, in some other implementations, a Euclidean distance calculation method may alternatively be used to calculate the object distance between the object to be recognized and the current vehicle based on the coordinates of the object to be recognized on the BEV image.

Step 13: Determine a first feature similarity between the current-frame object to be recognized and the previous-frame object to be recognized based on the object distances.

Object distances of two objects to be recognized being closer to each other indicates a larger similarity between the two objects to be recognized. In this implementation, a distance deviation between the object distances of the two objects to be recognized may be calculated first, then an inverse operation is performed on the distance deviation, and a result of the inverse operation is used as the first feature similarity, so that the first feature similarity is positively correlated with the similarity between the objects to be recognized (a larger first feature similarity indicates a larger similarity between the objects to be recognized, and a smaller first feature similarity indicates a smaller similarity between the objects to be recognized). The inverse operation refers to an operation method that makes the operation result negatively correlated with the distance deviation, that is, a smaller distance deviation indicates a larger operation result obtained by performing the inverse operation on the distance deviation. For example, in some implementations, after the distance deviation between the object distances of the two objects to be recognized is calculated, the inverse operation may be performed on the distance deviation by using the following formula (2).

$$d1' = \frac{1}{d1} \ (2)$$

The parameter $d1'$ in formula (2) represents an operation result obtained by performing an inverse operation on the distance deviation d1.

Through the method described in the above step 11 to step 13, the feature similarity between the objects to be recognized may be accurately determined based on the object position information in the image features.

2. A feature similarity is determined based on an object bounding box.

In this implementation, the feature similarity between the objects to be recognized may be determined based on the object bounding box in the image features through the following step 21 and step 22.

Step 21: Calculate an intersection over union between a bounding box of the current-frame object to be recognized and a bounding box of the previous-frame object to be recognized based on object bounding boxes in the image features.

Step 22: Determine a second feature similarity between the current-frame object to be recognized and the previous-frame object to be recognized based on the intersection over union.

A larger intersection over union between the two objects to be recognized indicates a larger similarity between the two objects to be recognized. The second feature similarity determined based on the intersection over union is positively correlated with the similarity between the objects to be recognized (a larger second feature similarity indicates a larger similarity between the objects to be recognized, and a smaller first feature similarity indicates a smaller similarity between the objects to be recognized).

Through the method described in the above step 21 and step 22, the feature similarity between the objects to be recognized may be accurately determined based on the object bounding box in the image features.

The above is a detailed description of a method for determining the feature similarity between the objects to be recognized in step S1011. Step S1012 is further described below.

Step S1012: Associate the current-frame object to be recognized with the previous-frame object to be recognized based on the feature similarity, to form the at least one single-sensor-level object to be recognized.

Since magnitude of the feature similarity may indicate a similarity between the objects to be recognized, associating the objects to be recognized based on the feature similarity may allow the same objects to be recognized to be more accurately associated to form a single-sensor-level object to be recognized.

In this implementation, objects to be recognized with a larger feature similarity may be associated based on the magnitude of the feature similarity to form a single-sensor-level object to be recognized. According to step S1011, the feature similarity between the objects to be recognized, such as the first feature similarity and the second feature similarity, may be determined by using different methods based on different feature information. Correspondingly, in this implementation, the objects to be recognized may be associated based on the first feature similarity, or may be associated based on the second feature similarity, or may be associated based on both the first feature similarity and the second feature similarity.

Specifically, in some implementations, for each current-frame object to be recognized, the following step 31 to step 33 may be performed separately, and the current-frame object to be recognized may be associated with each previous-frame object to be recognized based on the first feature similarity or the second feature similarity.

Step 31: Determine whether the first feature similarity between the current-frame object to be recognized and the previous-frame object to be recognized is greater than a preset first similarity threshold or whether the second feature similarity between the current-frame object to be recognized and the previous-frame object to be recognized is greater than a preset second similarity threshold. If the first feature similarity is greater than the preset first similarity threshold, or the second feature similarity is greater than the preset second similarity threshold, perform step 32. Otherwise, perform step 33.

It should be noted that those skilled in the art can flexibly set the specific values of the preset first similarity threshold and the preset second similarity threshold according to actual needs, which are not specifically limited in this implementation.

Step 32: Associate the current-frame object to be recognized with the previous-frame object to be recognized, to form a single-sensor-level object to be recognized, that is, the two objects to be recognized are associated to form a single-sensor-level object to be recognized.

Step 33: Skip associating the current-frame object to be recognized with the previous-frame object to be recognized, and separately use, as a single-sensor-level object to be recognized, the current-frame object to be recognized.

Through the above step 31 to step 33, the objects to be recognized may be associated based on the first feature similarity or the second feature similarity. In some other implementations, in order to improve the accuracy of associating the objects to be recognized, the objects to be recognized may be associated based on both the first feature similarity and the second feature similarity. Specifically, in these implementations, for each current-frame object to be recognized, the following step 41 to step 45 may be performed separately, and the current-frame object to be recognized may be associated with each previous-frame object to be recognized.

Step 41: Determine whether the first feature similarity between the current-frame object to be recognized and the previous-frame object to be recognized is greater than a preset first similarity threshold; and if the first feature similarity is greater than the preset first similarity threshold, perform step 42; or if the first feature similarity is less than or equal to the preset first similarity threshold, perform step 43.

Step 42: Associate the current-frame object to be recognized with the previous-frame object to be recognized, to form one of the at least one single-sensor-level object to be recognized.

Step 43: Determine whether the second feature similarity between the current-frame object to be recognized and the previous-frame object to be recognized is greater than a preset second similarity threshold; and if the second feature similarity is greater than the preset second similarity threshold, perform step 44; or if the second feature similarity is less than or equal to the preset second similarity threshold, perform step 45.

Step 44: Associate the current-frame object to be recognized with the previous-frame object to be recognized, to form one of the at least one single-sensor-level object to be recognized.

Step 45: Skip associating the current-frame object to be recognized with the previous-frame object to be recognized, and separately use, as a single-sensor-level object to be recognized, the current-frame object to be recognized.

Through the method described in the above step 41 to step 45, after it is determined, based on the first feature similarity, that the objects to be recognized may be associated, there is no need to perform subsequent step 43 to step 45. This can not only reduce the resource consumption of computers and other devices used to perform the above method, but also improve the efficiency in associating the objects to be recognized. When it cannot be determined, based on the first feature similarity, whether the objects to be recognized can be associated, a further determination can be made based on the second feature similarity, thereby improving the accuracy of associating the objects to be recognized.

A further description of step S 101 in the embodiment shown in FIG. 1 is made above. A further description of step S 102 in the embodiment shown in FIG. 1 is further made below.

Referring to FIG. 3, in order to accurately associate the single-sensor-level objects to be recognized corresponding to different vehicle-mounted vision sensors to form at least one cross-sensor-level object to be recognized, in one implementation of the above step S102, the objects to be recognized can be associated through the following step S1021 and step S1022.

Step S1021: Determine, based on the image feature of each of the at least one single-sensor-level object to be recognized, a feature similarity between the single-sensor-level objects to be recognized that correspond to the different vehicle-mounted vision sensors.

The feature similarity is a similarity between the image features of the "single-sensor-level objects to be recognized". A larger feature similarity indicates a larger similarity between the "single-sensor-level objects to be recognized", and a smaller feature similarity indicates a smaller similarity between the "single-sensor-level objects to be recognized".

Since the image feature of the "single-sensor-level object to be recognized" may also include various feature information such as object position information, a size, and a direction cosine of the object to be recognized, in this implementation, a feature similarity between objects to be recognized may also be determined by using different methods based on different feature information. A specific method for determining a feature similarity between objects to be recognized in this implementation is described below.

1. A feature similarity is determined based on object position information.

In this implementation, the feature similarity between the different single-sensor-level objects to be recognized may be determined based on the object position information in the image features through the following step 51 to step 53.

Step 51: Perform, based on object position information in the image feature, coordinate system transformation on each of the single-sensor-level objects to be recognized, to transform the single-sensor-level object to be recognized into a bird's eye view (BEV) image with a current vehicle as an origin of a BEV coordinate system. In this implementation, a conventional coordinate system transformation method in the field of image processing technologies may be used to transform a single-sensor-level object to be recognized to the BEV image based on object position information of the object to be recognized. The coordinate system transformation method is not described in details in this implementation.

Step 52: Calculate an object distance between the single-sensor-level object to be recognized and the current vehicle based on coordinates of the single-sensor-level object to be recognized on the BEV image.

In this implementation, an object distance between a single-sensor-level object to be recognized and the current vehicle may be calculated in the following way:

Coordinates of the single-sensor-level object to be recognized on the BEV image include an X-axis coordinate and a Y-axis coordinate in the image coordinate system of the BEV image. After the coordinates of the single-sensor-level object to be recognized on the BEV image are obtained, the X-axis coordinate and the Y-axis coordinate may be normalized first, and then the object distance between the single-sensor-level object to be recognized and the current vehicle may be calculated using the following formula (3).

$$d2 = x_{nor2}^2 + y_{nor2}^2 \ (3)$$

In formula (3), parameters are respectively defined as follows: d2 represents the object distance between the single-sensor-level object to be recognized and the current vehicle, $x_{nor2}$ represents a normalized X-axis coordinate, and $y_{nor2}$ represents a normalized Y-axis coordinate.

In addition, in some other implementations, a Euclidean distance calculation method may alternatively be used to calculate the object distance between the single-sensor-level object to be recognized and the current vehicle based on the coordinates of the single-sensor-level object to be recognized on the BEV image.

Step 53: Determine, based on the object distance, a third feature similarity between the single-sensor-level objects to be recognized that correspond to the different vehicle-mounted vision sensors.

Object distances of two single-sensor-level objects to be recognized being closer to each other indicates a larger similarity between the two single-sensor-level objects to be recognized. In this implementation, a distance deviation between the object distances of the two single-sensor-level objects to be recognized may be calculated first, then an inverse operation is performed on the distance deviation, and a result of the inverse operation is used as the third feature similarity, so that the third feature similarity is positively correlated with the similarity between the single-sensor-level objects to be recognized (a larger third feature similarity indicates a larger similarity between the objects to be recognized, and a smaller first feature similarity indicates a smaller similarity between the objects to be recognized). The inverse operation refers to an operation method that makes the operation result negatively correlated with the distance deviation, that is, a smaller distance deviation indicates a larger operation result obtained by performing the inverse operation on the distance deviation. For example, in some implementations, after the distance deviation between the object distances of the two single-sensor-level objects to be recognized is calculated, the inverse operation may be performed on the distance deviation by using the following formula (4).

$$d2' = \frac{1}{d2} \ (4)$$

The parameter $d2'$ in formula (4) represents an operation result obtained by performing an inverse operation on the distance deviation d2.

Through the method described in the above step 51 to step 53, the feature similarity between the different single-sensor-level objects to be recognized may be accurately determined based on the object position information in the image features.

2. A feature similarity is determined based on an object bounding box.

In this implementation, the feature similarity between the different single-sensor-level objects to be recognized may be determined based on the object bounding box in the image features through the following step 61 and step 62.

Step 61: Separately calculate, based on an object bounding box in the image feature, an intersection over union between bounding boxes of the single-sensor-level objects to be recognized that correspond to the different vehicle-mounted vision sensors.

Step 62: Determine, based on the intersection over union, a fourth feature similarity between the single-sensor-level objects to be recognized that correspond to the different vehicle-mounted vision sensors.

A larger intersection over union between the two single-sensor-level objects to be recognized indicates a larger similarity between the two single-sensor-level objects to be recognized. The fourth feature similarity determined based on the intersection over union is positively correlated with the similarity between the single-sensor-level objects to be recognized (a larger fourth feature similarity indicates a larger similarity between the objects to be recognized, and a smaller first feature similarity indicates a smaller similarity between the objects to be recognized).

Through the method described in the above step 61 and step 62, the feature similarity between the single-sensor-level objects to be recognized may be accurately determined based on the object bounding box in the image features.

3. A feature similarity is determined based on a person re-identification (ReID) feature in the image features.

In this implementation, the feature similarity between the different single-sensor-level objects to be recognized may be determined based on the ReID feature in the image features through the following step 71 and step 72.

Step 71: Obtain a ReID feature of each of the single-sensor-level objects to be recognized by using a person re-identification technology and based on the image feature of each of the at least one single-sensor-level object to be recognized.

All the image features of each single-sensor-level object to be recognized can be mapped into a feature space of the same dimension by using a person re-identification technology, that is, a ReID feature of each single-sensor-level object to be recognized is a feature in the feature space of the same dimension.

Step 72: Determine, based on the ReID feature, a fifth feature similarity between the single-sensor-level objects to be recognized that correspond to the different vehicle-mounted vision sensors.

A larger fifth feature similarity indicates a larger similarity between the single-sensor-level objects to be recognized. A smaller fifth feature similarity indicates a smaller similarity between the single-sensor-level objects to be recognized. In this implementation, a conventional feature similarity calculation method in the field of image processing technologies may be used to calculate the fifth feature similarity based on the ReID feature. For example, a Euclidean distance between ReID features of different objects to be recognized may be calculated, and then an inverse operation may be performed on the Euclidean distance to obtain the fifth feature similarity. The inverse operation refers to an operation method that makes the operation result negatively correlated with the Euclidean distance, that is, a smaller Euclidean distance indicates a larger operation result obtained by performing the inverse operation on the Euclidean distance. For example, in the inverse operation, the inverse of the Euclidean distance may be calculated.

Through the method described in the above step 71 and step 72, the feature similarity between the different single-sensor-level objects to be recognized may be accurately determined based on the ReID feature in the image features.

Further, in some preferred implementations, after the third feature similarity or the fourth feature similarity or the fifth feature similarity between the different single-sensor-level objects to be recognized is determined by the above method, weighted sum calculation may be further performed on the third feature similarity and/or the fourth feature similarity and/or the fifth feature similarity, and a calculation result may be used as a final feature similarity. Specifically, different weights may be set for the third feature similarity, the fourth feature similarity, and the fifth feature similarity respectively, and then weighted sum calculation may be performed on the third feature similarity and/or the fourth feature similarity and/or the fifth feature similarity based on the weights. In some implementations, weighted sum calculation may be performed based on the weights corresponding to the third feature similarity, the fourth feature similarity, and the fifth feature similarity and using the following formula (5) to obtain the final feature similarity.

$$S_{final} = k_1 \times S_1 + k_2 \times S_2 + k_3 \times S_3 \quad (5)$$

In formula (5), parameters are respectively defined as follows: $S_{final}$ represents the final feature similarity, $S_1$ and $k_1$ respectively represent the third feature similarity and a weight thereof, $S_2$ and $k_2$ respectively represent the fourth feature similarity and a weight thereof, and $S_3$ and $k_3$ respectively represent the fifth feature similarity and a weight thereof. It should be noted that those skilled in the art can flexibly set the specific values of $k_1$, $k_2$, and $k_3$ according to actual needs. For example, in some preferred implementations, $k_1 = k_2 = k_3 = 1$.

Step S1022: Associate, based on the feature similarity, the single-sensor-level objects to be recognized that correspond to the different vehicle-mounted vision sensors, to form the at least one cross-sensor-level object to be recognized.

Since magnitude of the feature similarity may indicate a similarity between the single-sensor-level objects to be recognized, associating the single-sensor-level objects to be recognized based on the feature similarity may allow the same single-sensor-level objects to be recognized to be more accurately associated to form a cross-sensor-level object to be recognized.

In some implementations, for each single-sensor-level object to be recognized, the single-sensor-level objects to be recognized that correspond to different vehicle-mounted vision sensors may be associated through the following step 81 to step 83, to form at least one cross-sensor-level object to be recognized.

Step 81: Determine whether there is another single-sensor-level object to be recognized whose feature similarity with the current single-sensor-level object to be recognized is greater than a preset third similarity threshold. If yes, perform step 82. Otherwise, perform step 83.

Those skilled in the art can flexibly set the specific value of the third similarity threshold according to actual needs. This is not specifically limited in the embodiments of the disclosure.

In addition, according to step S1021, different feature similarities may be determined by using a specific method of feature similarities between different objects to be recognized, such as the third feature similarity, the fourth feature similarity, the fifth feature similarity, and the final feature similarity. In an implementation, one or more of the above feature similarities are used to perform step 81.

For example, when one of the above feature similarities is used to perform step 81, step 81 may be performed based on the final feature similarity, that is, it is determined whether there is another single-sensor-level object to be recognized whose "final feature similarity" with the current single-sensor-level object to be recognized is greater than a preset third similarity threshold. If yes, perform step 82. Otherwise, perform step 83.

For another example, when a plurality of the above feature similarities are used to perform step 81, step 81 may be performed based on both the third feature similarity and the fourth feature similarity, that is, it is determined whether there is another single-sensor-level object to be recognized whose third feature similarity and fourth feature similarity with the current single-sensor-level object to be recognized are greater than respective preset third similarity thresholds. If yes, perform step 82. Otherwise, perform step 83. The third similarity threshold corresponding to the third feature similarity may be the same as or different from the third similarity threshold corresponding to the fourth feature similarity.

Step 82: Associate the current single-sensor-level object to be recognized with the another single-sensor-level object to be recognized, to form a cross-sensor-level object to be recognized.

Step 83: Separately use, as a cross-sensor-level object to be recognized, the current single-sensor-level object to be recognized.

Through the above step 81 to step 83, the single-sensor-level objects to be recognized corresponding to the different vehicle-mounted vision sensors may be accurately associated based on the feature similarity between the single-sensor-level objects to be recognized, to form a cross-sensor-level object to be recognized.

A further description of step S102 in the embodiment shown in FIG. 1 is made above. A further description of step S103 in the embodiment shown in FIG. 1 is further made below.

In order to accurately associate cross-sensor-level objects to be recognized to form a final object to be recognized, in some implementations of step S103, a two-dimensional similarity and/or a three-dimensional similarity between different cross-sensor-level objects to be recognized is separately calculated based on object two-dimensional information and/or object three-dimensional information in the image feature of each of the at least one cross-sensor-level object to be recognized, and the different cross-sensor-level objects to be recognized are associated based on the two-dimensional similarity and/or the three-dimensional similarity, to form the final object to be recognized. The object two-dimensional information includes at least two-dimensional coordinates of the object to be recognized, and the object three-dimensional information includes at least three-dimensional coordinates of the object to be recognized.

Specifically, in some implementations, the two-dimensional similarity between the different cross-sensor-level objects to be recognized may be separately calculated based on object two-dimensional information in the image feature of each of the at least one cross-sensor-level object to be recognized, and the different cross-sensor-level objects to be recognized may be associated based on the two-dimensional similarity, to form the final object to be recognized. Specifically, if a two-dimensional similarity between two cross-sensor-level objects to be recognized is greater than a preset two-dimensional similarity threshold, the two cross-sensor-level objects to be recognized are associated to form a final object to be recognized. Otherwise, the two cross-sensor-level objects to be recognized are not associated, and the two cross-sensor-level objects to be recognized each are considered as a final object to be recognized.

In some other implementations, the three-dimensional similarity between the different cross-sensor-level objects to be recognized may be separately calculated based on object three-dimensional information in the image feature of each of the at least one cross-sensor-level object to be recognized, and the different cross-sensor-level objects to be recognized may be associated based on the three-dimensional similarity, to form the final object to be recognized. Specifically, if a three-dimensional similarity between two cross-sensor-level objects to be recognized is greater than a preset three-dimensional similarity threshold, the two cross-sensor-level objects to be recognized are associated to form a final object to be recognized. Otherwise, the two cross-sensor-level objects to be recognized are not associated, and the two cross-sensor-level objects to be recognized each are considered as a final object to be recognized.

In some other implementations, the two-dimensional similarity and the three-dimensional similarity between the different cross-sensor-level objects to be recognized may be separately calculated based on object two-dimensional information and object three-dimensional information in the image feature of each of the at least one cross-sensor-level object to be recognized, and the different cross-sensor-level objects to be recognized may be associated based on the two-dimensional similarity and the three-dimensional similarity, to form the final object to be recognized. Specifically, if a two-dimensional similarity between two cross-sensor-level objects to be recognized is greater than a preset two-dimensional similarity threshold, and a three-dimensional similarity between two cross-sensor-level objects to be recognized is greater than a preset three-dimensional similarity threshold, the two cross-sensor-level objects to be recognized are associated to form a final object to be recognized. Otherwise, the two cross-sensor-level objects to be recognized are not associated, and the two cross-sensor-level objects to be recognized each are considered as a final object to be recognized.

It should be noted that those skilled in the art can flexibly set the specific values of the preset two-dimensional similarity threshold and the preset three-dimensional similarity threshold according to actual needs, which are not specifically limited in this implementation.

So far, a further description of step S103 is completed.

It should be noted that, although the steps are described in a particular sequence in the above embodiments, those skilled in the art may understand that, to implement the effects of the disclosure, different steps are not necessarily performed in such a sequence, and the steps may be performed simultaneously (in parallel) or in another sequence. These changes fall within the scope of protection of the disclosure.

Those skilled in the art may understand that all or some of the procedures in the methods in the above embodiments of the disclosure may be implemented by using a computer program instructing related hardware. The computer program may be stored in a computer-readable storage medium. When the computer program is executed by a processor, the steps in the above method embodiments may be implemented. The computer program includes computer program code, and the computer program code may be in the form of source code, target code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a computer device. In an embodiment of the computer device according to the disclosure, the computer device includes a processor and a storage apparatus. The storage apparatus may be configured to store a program for performing the object association method in the above method embodiment, and the processor may be configured to execute a program in the storage apparatus. The program includes but is not limited to the program for performing the object association method in the above method embodiment. For ease of description, only parts related to the embodiments of the disclosure are shown. For specific technical details that are not disclosed, refer to the method part of the embodiments of the disclosure. The computer device may be a control device formed by various electronic devices.

Further, the disclosure further provides a computer-readable storage medium. In an embodiment of the computer-readable storage medium according to the disclosure, the computer-readable storage medium may be configured to store a program for performing the object association method of the above method embodiments, and the program may be loaded and run by a processor to implement the above object association method. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, the disclosure further provides a vehicle. In an embodiment of a vehicle according to the disclosure, the vehicle may include the computer device described in the above embodiment of the computer device. In this embodiment, the vehicle may be a self-driving vehicle, an unmanned vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the disclosure have been described with reference to an implementation shown in the accompanying drawings. However, it would have been readily understood by those skilled in the art that the scope of protection of the disclosure is obviously not limited to these specific implementations. Without departing from the principles of the disclosure, those skilled in the art may make equivalent changes or replacements to related technical features. The technical solutions obtained after these changes or replacements fall within the scope of protection of the disclosure.

# EP 4 553 783 A1

**Claims**

1. An object association method, comprising:

associating, based on image features of objects to be recognized in multiple continuous frames of images collected by a same vehicle-mounted vision sensor, the objects to be recognized in the multiple continuous frames of images, to form at least one single-sensor-level object to be recognized that corresponds to the same vehicle-mounted vision sensor;
associating, based on an image feature of each of the at least one single-sensor-level object to be recognized, single-sensor-level objects to be recognized that correspond to different vehicle-mounted vision sensors, to form at least one cross-sensor-level object to be recognized; and
associating the at least one cross-sensor-level object to be recognized based on an image feature of each of the at least one cross-sensor-level object to be recognized, to form a final object to be recognized.

2. The object association method according to claim 1, wherein the step of "associating, based on image features of objects to be recognized in multiple continuous frames of images collected by a same vehicle-mounted vision sensor, the objects to be recognized in the multiple continuous frames of images, to form at least one single-sensor-level object to be recognized that corresponds to the same vehicle-mounted vision sensor" specifically comprises:

determining, based on an image feature of each object to be recognized in a current frame of image and an image feature of each object to be recognized in a previous frame of image, a feature similarity between the object to be recognized in the current frame and the object to be recognized in the previous frame; and
associating the object to be recognized in the current frame with the object to be recognized in the previous frame based on the feature similarity, to form the at least one single-sensor-level object to be recognized.

3. The object association method according to claim 2, wherein the step of "determining, based on an image feature of each object to be recognized in a current frame of image and an image feature of each object to be recognized in a previous frame of image, a feature similarity between the object to be recognized in the current frame and the object to be recognized in the previous frame" specifically comprises:

separately performing, based on object position information in the image feature, coordinate system transformation on the object to be recognized in the current frame and the object to be recognized in the previous frame, to transform the object to be recognized in the current frame and the object to be recognized in the previous frame into a bird's eye view (BEV) image with a current vehicle as an origin of a BEV coordinate system;
separately calculating an object distance between the object to be recognized in the current frame and the current vehicle, and an object distance between the object to be recognized in the previous frame and the current vehicle based on coordinates of the object to be recognized in the current frame and the object to be recognized in the previous frame on the BEV image; and
determining a first feature similarity between the object to be recognized in the current frame and the object to be recognized in the previous frame based on the object distances;
and/or
the step of "determining, based on an image feature of each object to be recognized in a current frame of image and an image feature of each object to be recognized in a previous frame of image, a feature similarity between the object to be recognized in the current frame and the object to be recognized in the previous frame" specifically comprises:

calculating an intersection over union between a bounding box of the object to be recognized in the current frame and a bounding box of the object to be recognized in the previous frame based on object bounding boxes in the image features; and
determining a second feature similarity between the object to be recognized in the current frame and the object to be recognized in the previous frame based on the intersection over union.

4. The object association method according to claim 3, wherein the step of "associating the object to be recognized in the current frame with the object to be recognized in the previous frame based on the feature similarity, to form the at least one single-sensor-level object to be recognized" specifically comprises:
for each object to be recognized in the current frame, associating the object to be recognized in the current frame with each object to be recognized in the previous frame in the following way:

determining whether the first feature similarity between the object to be recognized in the current frame and the object to be recognized in the previous frame is greater than a preset first similarity threshold; and

if the first feature similarity is greater than the first similarity threshold, associating the object to be recognized in the current frame with the object to be recognized in the previous frame, to form at least one single-sensor-level object to be recognized; or

if the first feature similarity is not greater than the first similarity threshold, continuing to determine whether the second feature similarity between the object to be recognized in the current frame and the object to be recognized in the previous frame is greater than a preset second similarity threshold; and

if the second feature similarity is greater than the second similarity threshold, associating the object to be recognized in the current frame with the object to be recognized in the previous frame, to form at least one single-sensor-level object to be recognized; or if the second feature similarity is less than or equal to the second similarity threshold, skipping associating the object to be recognized in the current frame with the object to be recognized in the previous frame, and separately using the object to be recognized in the current frame as a single-sensor-level object to be recognized;

or

the step of "associating the object to be recognized in the current frame with the object to be recognized in the previous frame based on the feature similarity, to form the at least one single-sensor-level object to be recognized" specifically comprises:

for each object to be recognized in the current frame, associating the object to be recognized in the current frame with each object to be recognized in the previous frame in the following way:

determining whether the first feature similarity between the object to be recognized in the current frame and the object to be recognized in the previous frame is greater than a preset first similarity threshold or whether the second feature similarity between the object to be recognized in the current frame and the object to be recognized in the previous frame is greater than a preset second similarity threshold; and

if the first feature similarity is greater than the first similarity threshold or the second feature similarity is greater than the second similarity threshold, associating the object to be recognized in the current frame with the object to be recognized in the previous frame, to form at least one single-sensor-level object to be recognized; or if the first feature similarity is not greater than the first similarity threshold or the second feature similarity is not greater than the second similarity threshold, skipping associating the object to be recognized in the current frame with the object to be recognized in the previous frame, and separately using the object to be recognized in the current frame as a single-sensor-level object to be recognized.

5. The object association method according to claim 1, wherein the step of "associating, based on an image feature of each of the at least one single-sensor-level object to be recognized, single-sensor-level objects to be recognized that correspond to different vehicle-mounted vision sensors, to form at least one cross-sensor-level object to be recognized" specifically comprises:

determining, based on the image feature of each of the at least one single-sensor-level object to be recognized, a feature similarity between the single-sensor-level objects to be recognized that correspond to the different vehicle-mounted vision sensors; and

associating, based on the feature similarity, the single-sensor-level objects to be recognized that correspond to the different vehicle-mounted vision sensors, to form the at least one cross-sensor-level object to be recognized.

6. The object association method according to claim 5, wherein the step of "determining, based on the image feature of each of the at least one single-sensor-level object to be recognized, a feature similarity between the single-sensor-level objects to be recognized that correspond to the different vehicle-mounted vision sensors" specifically comprises:

performing, based on object position information in the image feature, coordinate system transformation on each of the single-sensor-level objects to be recognized, to transform the single-sensor-level object to be recognized into a bird's eye view (BEV) image with a current vehicle as an origin of a BEV coordinate system;

calculating an object distance between the single-sensor-level object to be recognized and the current vehicle based on coordinates of the single-sensor-level object to be recognized on the BEV image; and

determining, based on the object distance, a third feature similarity between the single-sensor-level objects to be recognized that correspond to the different vehicle-mounted vision sensors;

and/or

the step of "determining, based on the image feature of each of the at least one single-sensor-level object to be recognized, a feature similarity between the single-sensor-level objects to be recognized that correspond to the different vehicle-mounted vision sensors" specifically comprises:

separately calculating, based on an object bounding box in the image feature, an intersection over union between bounding boxes of the single-sensor-level objects to be recognized that correspond to the different vehicle-mounted vision sensors; and
determining, based on the intersection over union, a fourth feature similarity between the single-sensor-level objects to be recognized that correspond to the different vehicle-mounted vision sensors;
and/or
the step of "determining, based on the image feature of each of the at least one single-sensor-level object to be recognized, a feature similarity between the single-sensor-level objects to be recognized that correspond to the different vehicle-mounted vision sensors" specifically comprises:

obtaining a person re-identification (ReID) feature of each of the single-sensor-level objects to be recognized by using a person ReID technology and based on the image feature of each of the at least one single-sensor-level object to be recognized; and
determining, based on the ReID feature, a fifth feature similarity between the single-sensor-level objects to be recognized that correspond to the different vehicle-mounted vision sensors;
and/or
the step of "associating, based on the feature similarity, the single-sensor-level objects to be recognized that correspond to the different vehicle-mounted vision sensors, to form the at least one cross-sensor-level object to be recognized" specifically comprises:

for each of the single-sensor-level objects to be recognized, determining whether there is another single-sensor-level object to be recognized whose feature similarity with the current single-sensor-level object to be recognized is greater than a preset third similarity threshold; and
if there is the another single-sensor-level object to be recognized, associating the current single-sensor-level object to be recognized with the another single-sensor-level object to be recognized, to form a cross-sensor-level object to be recognized; or
if there is no another single-sensor-level object to be recognized, separately using the current single-sensor-level object to be recognized as a cross-sensor-level object to be recognized.

7. The object association method according to claim 6, wherein the step of "determining, based on the image feature of each of the at least one single-sensor-level object to be recognized, a feature similarity between the single-sensor-level objects to be recognized that correspond to the different vehicle-mounted vision sensors" further comprises: performing weighted sum calculation on the third feature similarity and/or the fourth feature similarity and/or the fifth feature similarity, and using a calculation result as a final feature similarity.

8. The object association method according to claim 1, wherein the step of "associating the at least one cross-sensor-level object to be recognized based on an image feature of each of the at least one cross-sensor-level object to be recognized, to form a final object to be recognized" specifically comprises:

separately calculating a two-dimensional similarity between different cross-sensor-level objects to be recognized based on object two-dimensional information in the image feature of each of the at least one cross-sensor-level object to be recognized, and associating the different cross-sensor-level objects to be recognized based on the two-dimensional similarity, to form the final object to be recognized;
and/or
separately calculating a three-dimensional similarity between different cross-sensor-level objects to be recognized based on object three-dimensional information in the image feature of each of the at least one cross-sensor-level object to be recognized, and associating the different cross-sensor-level objects to be recognized based on the three-dimensional similarity, to form the final object to be recognized.

9. A computer device, comprising at least one processor and a storage apparatus configured to store a plurality of program codes, wherein the program codes are adapted to be loaded and executed by the at least one processor to perform the object association method according to any one of claims 1 to 8.

10. A computer-readable storage medium storing a plurality of pieces of program code, wherein the program code is adapted to be loaded and run by a processor to perform the object association method according to any one of claims 1 to 8.

**11.** A vehicle, comprising the computer device according to claim 9.

Start

Associate, based on image features of objects to be recognized in multiple continuous frames of images collected by a same vehicle-mounted vision sensor, the objects to be recognized in multiple continuous frames of images, to form at least one single-sensor-level object to be recognized that corresponds to the same vehicle-mounted vision sensor — **S101**

Associate, based on an image feature of each of the at least one single-sensor-level object to be recognized, single-sensor-level objects to be recognized that correspond to different vehicle-mounted vision sensors, to form at least one cross-sensor-level object to be recognized — **S102**

Associate the at least one cross-sensor-level object to be recognized based on an image feature of each of the at least one cross-sensor-level object to be recognized, to form a final object to be recognized — **S103**

End

*FIG. 1*

Start

Determine, based on an image feature of each object to be recognized in a current frame of image and an image feature of each object to be recognized in a previous frame of image, a feature similarity between the object to be recognized in the current frame and the object to be recognized in the previous frame — S1011

Associate the object to be recognized in the current frame with the object to be recognized in the previous frame based on the feature similarity, to form the at least one single-sensor-level object to be recognized — S1012

End

*FIG. 2*

Start

Determine, based on the image feature of each of the at least one single-sensor-level object to be recognized, a feature similarity between the single-sensor-level objects to be recognized that correspond to the different vehicle-mounted vision sensors — S1021

Associate, based on the feature similarity, the single-sensor-level objects to be recognized that correspond to the different vehicle-mounted vision sensors, to form the at least one cross-sensor-level object to be recognized — S1022

End

*FIG. 3*

## INTERNATIONAL SEARCH REPORT

| International application No. |
|---|
| **PCT/CN2023/104327** |

| **A.** | **CLASSIFICATION OF SUBJECT MATTER** |
|---|---|
| | G06V10/74(2022.01)i;  G06V20/58(2022.01)i |

According to International Patent Classification (IPC) or to both national classification and IPC

| **B.** | **FIELDS SEARCHED** |
|---|---|

Minimum documentation searched (classification system followed by classification symbols)

　　IPC:G06V

Documentation searched other than minimum documentation to the extent that such documents are included in the fields searched

Electronic data base consulted during the international search (name of data base and, where practicable, search terms used)

　　VEN, CNABS, CNTXT, WOTXT, EPTXT, USTXT, CNKI, IEEE: 无人驾驶, 自动驾驶, 无人, 车, 传感器, 雷达, 关联, 融合, 相似度, 阈值, 距离, 坐标, 边界, 交并比, 重识别, 二维, 三维, driverless, autonomous, drone, car, sensor, radar, association, fusion, similarity, threshold, distance, coordinate, boundary, intersection, re-recognition, two-dimensional, three-dimensional, 2D, 3D, ReID

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 115205820 A (ANHUI NIO DRIVE TECHNOLOGY HOLDINGS CO., LTD.) 18 October 2022 (2022-10-18)<br>　　claims 1-10, and description, paragraph 0228 | 1-11 |
| X | CN 109583505 A (BAIDU ONLINE NETWORK TECHNOLOGY (BEIJING) CO., LTD.) 05 April 2019 (2019-04-05)<br>　　description, paragraphs 0035-0044 and 0077 | 1-11 |
| A | CN 109635861 A (BAIDU ONLINE NETWORK TECHNOLOGY (BEIJING) CO., LTD.) 16 April 2019 (2019-04-16)<br>　　entire document | 1-11 |
| A | CN 112084810 A (HANGZHOU HIKVISION DIGITAL TECHNOLOGY CO., LTD.) 15 December 2020 (2020-12-15)<br>　　entire document | 1-11 |

✓ Further documents are listed in the continuation of Box C. 　　✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 September 2023** | **20 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/104327**

**C.    DOCUMENTS CONSIDERED TO BE RELEVANT**

| Category* | Citation of document, with indication, where appropriate, of the relevant passages | Relevant to claim No. |
|---|---|---|
| A | CN 113807168 A (BEIJING BEESCLOUD INFORMATION TECHNOLOGY CO., LTD.) 17 December 2021 (2021-12-17)<br>entire document | 1-11 |
| A | US 2021345286 A1 (NEC CORP.) 04 November 2021 (2021-11-04)<br>entire document | 1-11 |

Form PCT/ISA/210 (second sheet) (July 2022)

**INTERNATIONAL SEARCH REPORT**
Information on patent family members

International application No.

**PCT/CN2023/104327**

| Patent document cited in search report | | | Publication date (day/month/year) | Patent family member(s) | | | Publication date (day/month/year) |
|---|---|---|---|---|---|---|---|
| CN | 115205820 | A | 18 October 2022 | None | | | |
| CN | 109583505 | A | 05 April 2019 | None | | | |
| CN | 109635861 | A | 16 April 2019 | None | | | |
| CN | 112084810 | A | 15 December 2020 | None | | | |
| CN | 113807168 | A | 17 December 2021 | None | | | |
| US | 2021345286 | A1 | 04 November 2021 | JPWO | 2020090390 | A1 | 07 October 2021 |
| | | | | WO | 2020090390 | A1 | 07 May 2020 |

Form PCT/ISA/210 (patent family annex) (July 2022)

22

**REFERENCES CITED IN THE DESCRIPTION**

**Patent documents cited in the description**

- CN 115205820 A